# EUROPÄISCHE PATENTSCHRIFT

(11) **EP 2 175 499 B1**
(45) Veröffentlichungstag und Bekanntmachung des Hinweises auf die Patenterteilung: **21.11.2018**
(21) Anmeldenummer: 09172504.4
(22) Anmeldetag: 08.10.2009
(51) Int. Cl.: A61C 19/00, H01L 33/62, H01L 33/64

(54) **Halbleiter-Strahlungsquelle**
Semi-conductor radiation source
Source de rayonnement semi-conductrice

(30) Priorität: 10.10.2008 DE 102008051256
(43) Veröffentlichungstag der Anmeldung: 14.04.2010
(73) Patentinhaber: Ivoclar Vivadent AG, 9494 Schaan (LI)
(72) Erfinder: Plank, Wolfgang, AT-6830, Rankweil (AT)
(74) Vertreter: Baronetzky, Klaus

(56) Entgegenhaltungen:
- EP-A- 1 046 859
- EP-A- 1 465 256
- EP-A1- 1 398 005
- DE-A1- 10 063 876
- DE-A1- 10 350 913
- JP-A- 2000 188 001
- US-A1- 2005 135 094
- US-A1- 2005 254 264
- US-B1- 6 331 111

## Beschreibung

Die Erfindung betrifft eine Halbleiter-Strahlungsquelle, gemäß Anspruch 1.

Eine Halbleiter-Strahlungsquelle gemäß dem Oberbegriff des Anspruchs 1 ist aus der DE 102 42 366 A1 bekannt. Bei einer derartigen Halbleiter-Strahlungsquelle können Ströme erheblicher Größe der Strahlungsquelle zugeführt werden, um die erwünschte Lichtleistung bereitzustellen. Dies bedingt einerseits eine gute Kühlung, aber andererseits auch entsprechende Querschnittsabmessungen für die Zuführungsleitungen. Aus der genannten Druckschrift ist die Verwendung einer biegsamen Trägerschicht aus ihrem isolierenden Material zur Ausgestaltung einer gedruckten Schaltung bekannt.

Diese Halbleiter-Strahlenquelle verwendet eine biegsame Trägerschicht, die speziell angepasst ist, so dass sie beispielsweise auch einer runden Form wie derjenigen des dortigen Kühlstabs, beim Abbiegen über die Vorderkante folgen kann. Daher ist für eine derartige biegsame Trägerschicht eine besonders große Elastizität erforderlich, die an sich den Eigenschaften der verwendeten Leiterbahnen zuwider läuft. Insbesondere lassen sich bei derartigen elastisch-biegsamen Lösungen keine großen Leitungsquerschnitte unterbringen.

Demgegenüber liegt der Erfindung die Aufgabe zugrunde, eine Halbleiter-Strahlungsquelle, die insbesondere für ein Lichthärtgerät für die Dentaltechnik geeignet ist, so auszugestalten, dass eine hohe Leistung bei guter Kühlung der verwendeten Halbleiter-Chips mit einer kompakten und auch für unterschiedliche Leistungsstufen anpassbaren Anordnung kombiniert wird.

Die Aufgabe wird erfindungsgemäß durch Anspruch 1 gelöst.

Weitere Weiterbildungen ergeben sich aus den Unteransprüchen.

Durch die Anordnung eines an sich bekannten Flexprints flächig auf der Oberfläche eines Kühlkörpers, auf dem auch die LED-Chips abgestützt sind, ergibt sich zunächst die Möglichkeit, den Flexprint sich über die gesamte Breite einer Seitenkante des Kühlkörpers erstrecken zu lassen. Hierdurch lässt sich der Flexprint dort leicht umbiegen, so dass elektrische Leiterbahnen ohne nennenswerte Beschränkungen hinsichtlich der Stromaufnahmekapazität sich nach hinten erstrecken können und damit der Stromzuleitung auch beispielsweise von LED-Chips mit größerer Leistung dienen können.

In vorteilhafter Ausgestaltung ist es erfindungsgemäß möglich, den Flexprint gleichsam doppelt umzuknicken und ihn sich so in eine Ausnehmung hinein erstrecken zu lassen, die sich hinter dem Primärkühlkörper, der die LED-Chips trägt, erstreckt. Dies eröffnet die Möglichkeit, dort elektrische Bauteile verdeckt und geschützt aufgenommen unterzubringen, ohne dass die Wärmeableitung beeinträchtigt wäre.

Dadurch, dass sich der Flexprint über eine Außenkante des im Wesentlichen quarderförmigen Basiskörpers erstreckt, besteht die Möglichkeit, eine recht große Aufnahmebreite für die Leiterbahnen zur Verfügung zu stellen. Dies ermöglicht einen vergleichsweise großen Querschnitt pro Leiterbahn, in Kombination mit der recht großen Dicke der Leiterbahnen, die auch mehr als 0,035 mm, beispielsweise nur 0,07 mm betragen kann.

Durch die U-förmige Abstützung des Basiskörpers begibt sich zum einen eine auch seitlich steife Abstützung auf seitlichen säulenförmigen Abschnitten eines Wärmeableitkörpers, der den Stirnkörper trägt. Die säulenförmigen Abschnitte liegen zudem seitlich frei, so dass ihre Oberflächen zugleich als Kühlflächen eingesetzt werden können.

Durch die geschickte Kombination des Stirnkörpers mit dem Wärmeableitkörpers zur Bildung des Basiskörpers lässt sich zum einen der eher empfindliche Flexprint geschützt aufnehmen und elektronische Bauteile ebenfalls geschützt unterbringen. Die großflächige Ausnehmung ermöglicht es auch, die auf dem Abschnitt des Flexprints aufgebrachten elektronischen oder elektrischen Bauelemente oder Bauteile so aufzunehmen, dass sie außerhalb eines thermischen Kontakts mit dem Wärmeableitkörper sind und insofern nicht thermisch beeinträchtigt werden.

Bevorzugt ist unterhalb des eigentlichen Basiskörpers ein seitlicher Einschnitt oder eine Ausnehmung ausgebildet. Der Einschnitt erstreckt sich in besonders günstiger Weise von der Seite in den Basiskörper und/oder den Wärmeableitkörper hinein, so dass ein seitlich zugänglicher Einschnitt geschaffen wird, der Montageraum bietet, ohne dass die Wärmeableitfunktion vernachlässigt wird.

Bevorzugt erstreckt sich der Flexprint mindestens teilweise um den Basiskörper herum, ist also an einer Seite des Basiskörpers um mehr als 90° abgewinkelt. Während er auf der Oberseite des Basiskörpers aus Gründen der besseren Wärmeableitung auffliegt, kann er auf der Unterseite des Basiskörpers ebenfalls auffliegen oder sich frei in den Bereich der Ausnehmung hinein erstrecken.

Hierzu ist der Basiskörper im großflächigen Kontakt mit dem Wärmeableitkörper, und zwar den Einschnitt an mindestens zwei Seiten, bevorzugt an drei Seiten umgebend, während die vierte Seite offen ist.

Der betreffende Teil des Flexprints kann entweder den Basiskörper durchtreten, um in den Bereich der Ausnehmung zu gelangen. Alternativ ist der Basiskörper gegenüber dem Außenumfang des Wärmeableitkörpers in Richtung der offenen Seite der Ausnehmung etwas verkürzt, so dass der Flexprint dort um die betreffende Seitenkante des Basiskörpers herum geführt werden kann. Dennoch liegt der Flexprint bevorzugt innerhalb des Außenumfangs des Wärmeableitkörpers - mindestens in der axialen Projektion betrachtet, - so dass der Flexprint insofern gegen Beschädigungen geschützt ist.

Die Wärmeableitung ist erfindungsgemäß in günstiger Weise so ausgestaltet, dass an keiner Stelle zwischen der Wärmequelle, die durch den oder die LED-Chips gebildet ist, und dem rückwärtigen Bereich des Wärmeableitkörpers ein besonderer Wärmewiderstand vorgesehen ist.

Der Basiskörper ist bevorzugt - abgesehen von der Ausnehmung auf seiner Unterseite - quaderförmig und zwar in der Art eines flachen Quaders. Die Wärmequelle ist mittig auf der Oberseite angebracht, und es ist durch die dort flächig vorgesehene Auflage eine gute Wärmeableitung gewährleistet. Die Wärmeableitung erfolgt dann bevorzugt über zwei oder bevorzugt drei Wärmeableitschenkel des Basiskörpers, deren Stärke gegenüber der Stärke des Auflagebereichs der Wärmequelle auf dem Basiskörper vergrößert ist, so dass insofern auch hier kein hoher Wärmewiderstand entsteht.

Die Stirnflächen der Schenkel werden bevorzugt von mindestens gleich großen Auflageschenkeln des Wärmeableitkörpers kontaktiert, und zwar ebenfalls großflächig, wobei trotz der Bereitstellung einer großflächigen Auflage eine großzügig bemessene Montageraum-Ausnehmung bereit gestellt werden kann.

Es versteht sich, dass die genaue Form der Kontaktierung zwischen Basiskörper und Wärmeaufnahmekörper in weiten Bereichen an die Erfordernisse anpassbar ist. Beispielsweise können die Seitenschenkel des Basiskörpers, aber auch die Auflageschenkel des Wärmeableitkörpers gekrümmt dem Umfang des Wärmeableitkörpers folgend nach außen gezogen sein, was den Wärmeleitwert dort noch vergrößert.

Auch muss die Ausnehmung des Wärmeableitkörpers - und entsprechend die Ausnehmung des Basiskörpers - nicht einen rechteckigen Querschnitt aufweisen; es kommt auch beispielsweise ein trapezförmiger oder endseitig gebogener, also ausgerundeter Querschnitt in Betracht.

Insofern lässt sich das Verhältnis zwischen der Fläche der Ausnehmungen im Wärmeableitkörper und dem Basiskörper und den Auflageflächen zwischen Basiskörper und Wärmeableitkörper in weiten Bereichen an die Erfordernisse anpassen.

In einer modifizierten Ausgestaltung erstreckt sich der Flexprint über den Umfangsbereich des Basiskörpers bzw. endet dort und ist von der Kante beabstandet durch einen Schlitz in die Ausnehmung geführt, die sich auf der Rückseite des Stirnkörpers erstreckt. Diese Ausgestaltung ist besonders dann realisierbar, wenn der Stirnkörper und der Wärmeableitkörper voneinander trennbar sind. Die Montage kann dann so erfolgen, dass zunächst der Flexprint auf dem Basiskörper montiert wird, und zwar nachdem der Flexprint bereits mit elektrischen und elektronischen Bauelementen bestückt ist. Durch die Montage des Stirnkörpers mit dem Wärmeableitkörper wird dann der Flexprint zusätzlich geschützt und aufgenommen, wobei es sich versteht, dass für einen geringen Wärmewiderstand zwischen Stirnkörper und Wärmeableitkörper gesorgt werden sollte.

Erfindungsgemäß besonders günstig ist es, dass der Flexprint vollständig von dem Basiskörper lösbar ist, was besonders einfach ist, wenn die Anschlüsse steckbar gehalten sind. Bei einem Defekt eines elektronischen Bauteils lässt sich so preisgünstig und servicefreundlich eine Reparatur durchführen.

Erfindungsgemäß besonders günstig ist es, wenn die auf dem Flexprint aufgenommenen und wärmeabgebenden elektronischen oder elektrischen Bauteile in thermischen Kontakt mit dem Wärmeableitkörper stehen, insbesondere an einer Stelle, die von dem Stirnkörper beabstandet ist. Bei dieser Anordnung besteht die Möglichkeit, die Kühlungswirkung des gegenüber dem Stirnkörper kühleren Wärmeableitkörper für die Kühlung der Verlustleistung abgebenden elektronischen Bauelemente auszunutzen. Typischerweise sind an dem von dem Stirnkörper abgewandten Ende des Wärmeableitkörpers Kühlrippen oder Kühlflächen vorgesehen, die durch Konvektion oder Zwangsluftführung, beispielsweise durch ein Gebläse, gekühlt werden. Durch die Kühlung des Wärmeableitkörpers an dieser Stelle entsteht ein Temperaturgradient, dessen Größe von der Wärmeleitfähigkeit des Wärmeableitkörpers abhängt. Durch den vergleichsweise großen Bauquerschnitts des Wärmeableitkörpers lässt sich ein niedriger Wärmewiderstand und damit eine hohe Wärmeleitfähigkeit bereitstellen.

In vorteilhafter Ausgestaltung ist es vorgesehen, den Basiskörper in an sich bekannter Weise als Leiter einzusetzen. Hierbei kommt die Verwendung als Masseleiter besonders in Betracht, so dass die auf dem Flexprint aufgenommenen Leiterbahnen in ihrem Querschnitt deutlich vergrößert werden können, nachdem der Masseleiter dort dann entfällt. Auch diese Maßnahme trägt dazu bei, LED-Chips hohe Leistung kompakt anzuschließen und versorgen zu können. Es versteht sich, dass bei getrennter Ausführung des Stirnkörpers und des Wärmeableitkörpers in diesem Fall dafür Sorge getragen werden muss, dass eine widerstandsarme elektrische Verbindung zwischen diesen Körpern besteht.

In weiterer vorteilhafter Ausgestaltung ist es möglich, den Stirnkörper mit einer Durchtrittsbohrung zu versehen, die einen Übergang zwischen der Vorderfläche und des Sternkörpers, die den Flexprint aufnimmt, und der Rückseite des Stirnkörpers, auf der der Flexprint sich ebenfalls entlang erstrecken kann, bereitzustellen. Hier ist es möglich, unter Umgehung des Umlenkbereichs des Flexprints eine Durchkontaktierung zu realisieren, um nach Möglichkeit eine weitere Reduzierung des Innenwiderustands der Anschlussleitungen für die LED-Chips zu ermöglichen.

Es versteht sich, dass die LED-Chips in beliebiger geeigneter Weise angesteuert werden könne, auch durchaus mit einer Mehrzahl von Anschlussleitungen, so dass beispielsweise die äußeren LED-Chips in einem anderen Kreis als die inneren LED-Chips angesteuert werden können.

Erfindungsgemäß besonders günstig ist es, dass der Abschnitt eine Breite aufweist, die geringer als eine Seitenlänge des Basiskörpers ist.

Erfindungsgemäß besonders günstig ist es, dass sich der Abschnitt entlang wenigstens eines Teiles einer von dem LED-Chip abgewandten Rückseite des Basiskörpers, insbesonders dessen Stirnkörper erstreckt.

Erfindungsgemäß besonders günstig ist es, dass der Abschnitt eine Breite aufweist, die geringer als die Seitenlänge des Basiskörpers ist, in der Richtung parallel zur Breite betrachtet, und sich insbesondere, von einer Vorderseite des Basiskörpers ausgehend, mindestens entlang einer Seitenwand des Basiskörpers erstreckt.

Erfindungsgemäß besonders günstig ist es, dass der Basiskörper eine seitlichen Ausnehmung und/oder wenigstens eine Durchtrittsöffnung aufweist, in welcher sich ein Abschnitt des Flexprints erstreckt.

Erfindungsgemäß besonders günstig ist es, dass der Abschnitt sich entlang wenigstens eines Teiles einer von dem LED-Chip abgewandten Rückseite des Basiskörpers erstreckt.

Erfindungsgemäß besonders günstig ist es, dass der Abschnitt, insbesondere mindestens im Bereich der Ausnehmung, wenigstens ein elektronisches Bauteil wie eine Diode, ein Widerstand oder ein ASIC trägt, und insbesondere die elektronischen Bauteile in der Ausnehmung versenkt aufgenommen sind.

Erfindungsgemäß besonders günstig ist es, dass der Abschnitt ein freies Ende aufweist, das von der Rückseite des Basiskörpers frei abragt und insbesondere frei von elektronischen Bauteilen ist.

Erfindungsgemäß besonders günstig ist es, dass ein Stirnkörper des Basiskörpers mit einem Wärmeableitkörper thermisch verbunden ist.

Erfindungsgemäß besonders günstig ist es, dass der Abschnitt den Basiskörper im Wesentlichen U-förmig umgibt und an diesem flächig - ggf. unter Zwischenschaltung einer Isolierung - anliegt.

Erfindungsgemäß besonders günstig ist es, dass der Wärmeableitkörper eine Ausnehmung aufweist, in die der Abschnitt, insbesondere das freie Ende des Abschnitts, ragt.

Erfindungsgemäß besonders günstig ist es, dass der Basiskörper zweiteilig ausgebildet ist und einen Stirnkörper und einen Wärmeableitkörper aufweist, die thermisch miteinander intensiv verbunden sind.

Erfindungsgemäß besonders günstig ist es, dass eine Mehrzahl von LED-Chips auf dem Basiskörper angebracht sind, wobei mindestens ein LED-Chip separat ansteuerbar ist.

Erfindungsgemäß besonders günstig ist es, der Wärmeableitkörper eine Ausnehmung aufweist, die zu einer Ausnehmung in den Stirnkörper passt und seitlich offen ist.

Erfindungsgemäß besonders günstig ist es, dass wenigstens zwei LED-Chips Licht mit unterschiedlichen Wellenlängen emittieren.

Erfindungsgemäß besonders günstig ist es, dass eine Ausnehmung eines Wärmeableitkörpers des Basiskörpers ein freies Ende des Abschnitts des Flexprints aufnimmt, an dessen Ende insbesondere Steckkontakte ausgebildet sind.

Erfindungsgemäß besonders günstig ist es, dass jeder LED-Chip oder alle LED-Chips in einer Vertiefung des Basiskörpers angeordnet ist/sind.

Erfindungsgemäß besonders günstig ist es, dass ein Stirnkörper des Basiskörpers und ein Wärmeableitkörper des Basiskörpers flächig aufeinander aufliegen, insbesondere eine gemeinsame Ausnehmung umgebend und insbesondere U-förmig.

Erfindungsgemäß besonders günstig ist es, dass alle LED-Chips von einer Sammellinse abgedeckt sind.

Erfindungsgemäß besonders günstig ist es, eine Mehrzahl von LED-Chips in einer die LED-Chips umgebenden Durchtrittsöffnung des Flexprints innen angebracht sind, wobei mindestens zwei LED-Chips separat ansteuerbar sind und bevorzugt auch unterschiedliche Wellenlängen emittieren können.

Erfindungsgemäß besonders günstig ist es, dass jede Vertiefung, in der sich ein LED-Chip befindet, von einer zusätzlichen Linse abgedeckt ist.

Erfindungsgemäß besonders günstig ist es, eine Sammellinse die LED-Chips abdeckt und insbesondere nach der Art einer Haube umgibt.

Erfindungsgemäß besonders günstig ist es, die Sammellinse eine Ausnehmung aufweist, in der die LED-Chips aufgenommen sind und dass die Sammellinse gegen den Flexprint abgedichtet und die Ausnehmung insbesondere mit Silikon gefüllt ist.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: eine Explosionsansicht eines Ausführungsbeispiels der Halbleiter-Strahlungsquelle der Erfindung; und
- Fig. 2: eine schematische Schnittdarstellung des Ausführungsbeispiels der Halbleiter-Strahlungsquelle der Erfindung; und
- Fig. 3: eine vergrößerte Darstellung einer schematischen Seitenansicht einer weiteren Ausführungsform erfindungsgemäßen Halbleiter-Strahlungsquelle.

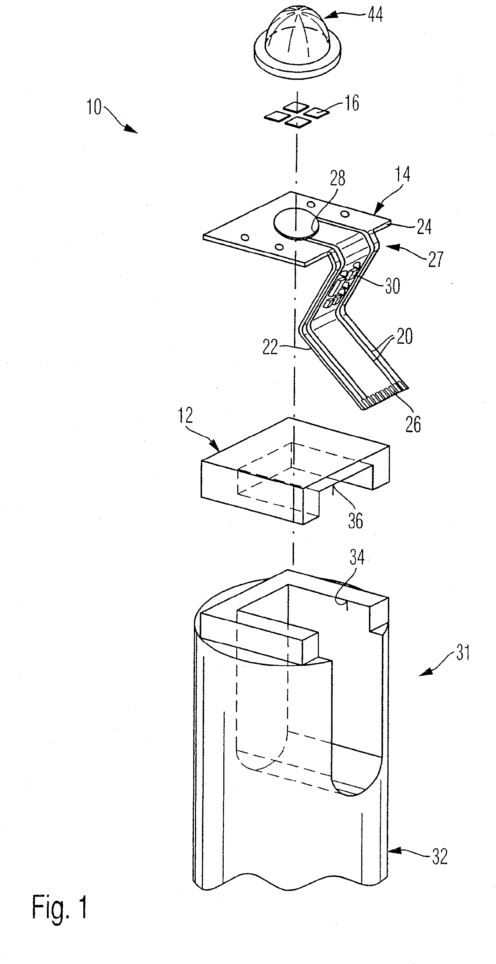

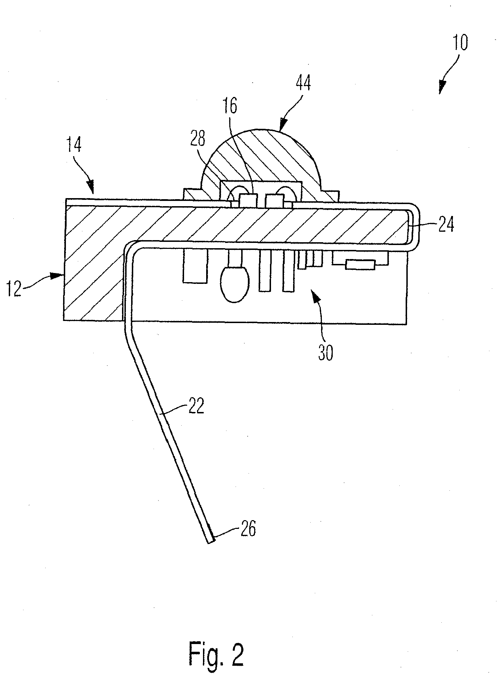

In den Fig. 1 und 2 ist eine Ausführungsform einer erfindungsgemäßen Halbleiter-Strahlungsquelle dargestellt. Die Halbleiter-Strahlungsquelle 10 weist einen Stirnkörper 12 auf, der mit einem Wärmeableitkörper 32 in thermischer Verbindung steht. Der Stirnkörper 12 ist im Wesentlichen quaderförmig und weist an seiner Unterseite eine Ausnehmung 36 auf. Die Ausnehmung 36 ist zu einer Seite hin offen. Sie wird von einem Mittelschenkel und zwei Seitenschenkel des Basiskörpers umgeben, die auf hierzu bündig geformten Schenkeln des Wärmeableitkörpers 32 aufliegen. Eine der Ausnehmung 36 zugewandte und ebenfalls bündige Ausnehmung 34 ist in den Wärmeableitkörper 32 vorgesehen, wobei die Tiefe der Ausnehmung 34 wesentlich tiefer als diejenige der Ausnehmung 36 ist.

Der Basiskörper, der aus dem Stirnkörper 12 und dem Wärmeableitekörper 32 gebildet ist, weist einen geringen Wärmewiderstand und dementsprechend einen hohen Wärmeleitwert auf, wobei es sich versteht, dass durch rückwärtige und hier nicht dargestellte Kühlelemente für eine ausreichende Kühlung Sorge getragen ist.

Die im Wesentlichen quadratische Oberseite des Stirnkörpers 12 ist im Wesentlichen vollflächig von einem Flexprint 14 bedeckt.

Der Flexprint 14 umgibt eine Mehrfachanordnung von LED-Chips 16, die in Wärmeleitverbindung, jedoch elektrisch isoliert, auf dem Stirnkörper 12 angebracht sind. Hierdurch ist sichergestellt, dass eine gute Kühlung der LED-Chips möglich ist. Die LED-Chips sind in an sich bekannter Weise mit Anschlusspads gebondet, die auf dem Flexprint 14 aufgenommen sind. Von dort erstrecken sich mehrere Leiterbahnen 20 über einen Anschlussbereich 22 des Flexprints 14. Der Flexprint 14 ist an einer Kante 24, die der benachbarten Kante des Stirnkörpers 12 entspricht, umgebogen, und zwar im Wesentlichen über die gesamte Breite der Ausnehmung 36. Hierdurch wird ein abgewinkelter oder abgebogener Abschnitt 27 des Flexprints 14 gebildet. Dort sind recht breite und vergleichsweise kurze Leiterbahnen angebracht, die sich bis zu einem Bereich 30 erstrecken, an welchem elektrische Bauelemente auf dem Flexprint angebracht sind.

Bei Bedarf ist es auch möglich, dort einen Spannungswandler unterzubringen, der sicherstellt, dass für die zugeführte Leistung vergleichsweise geringe Ströme und damit entsprechend verringerte Leistungsquerschnitte im Bereich von Kontaktflächen 26 des Anschlussbereichs 22 des Flexprints 14 erforderlich sind.

In an sich bekannter Weise kann der Bereich der LED-Chips 16 über einen Distanzring 28 mit einer Sammellinse 44 abgedeckt sein, die die emittierte Lichtstrahlung bündelt.

Wie aus Fig. 1 im Vergleich mit Fig. 2 ersichtlich ist, erstreckt sich der Anschlussbereich 22 des Flexprints 14 in die Ausnehmung 36 des Stirnkörpers, aber auch in die Ausnehmung 34 des Wärmeableitkörpers hinein, die beispielsweise als Einschnitt 31 in den Basiskörper 12 ausgebildet sein kann. Aus Fig. 2 ist ersichtlich, dass der Flexprint 14 im Wesentlichen U-förmig um den mittleren Teil des Stirnkörpers 12 gebogen sein kann, wobei die erforderlichen elektrischen Bauelemente im Bereich 30 kompakt und geschützt untergebracht sein können.

Auch der Bereich der Anschlussfelder 26 kann geschützt im Bereich der Ausnehmung 34 realisiert sein.

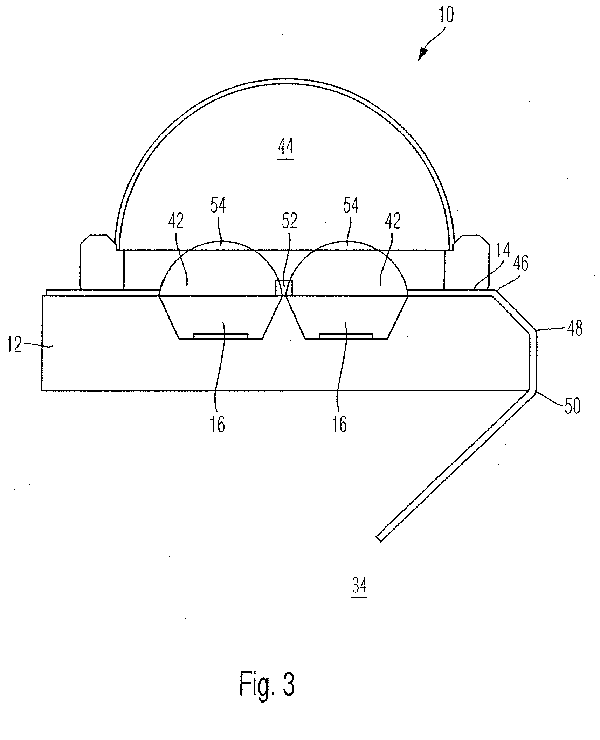

Gleiche Bezugszeichen weisen in Fig. 2 wie auch in Fig. 3 auf gleiche Teile wie in Fig. 1 hin.

In Fig. 3 ist eine weitere Ausführungsform der erfindungsgemäßen Halbleiter-Strahlungsquelle 10 dargestellt. Die Halbleiter-Strahlungsquelle gemäß Fig. 3 weist eine Mehrzahl von LED-Chips 16 auf, von denen zwei LED-Chips 16 in Fig. 3 dargestellt sind. Die LED-Chips sind in Vertiefungen 42 aufgenommen, die in dem Stirnkörper 12 des Basiskörpers vorgesehen sind. Der Flexprint 14 erstreckt sich in dieser Ausführungsform drei Mal abgebogen an den Stellen 46, 48 und 50 an dem Stirnkörper 12 entlang in eine Ausnehmung 34 hinein, die in dem in Fig. 3 nicht dargestellten Wärmeableitkörper 32 gebildet ist.

Die LED-Chips sind in dem dargestellten Ausführungsbeispiel in einer Vierergruppe angeordnet, und zwar zentral unterhalb der Sammellinse 44. Zur Verbesserung der Lichtabgabe weist sie zudem Einzel-Sammellinsen 54 auf, wobei jede Linse 54 die zugehörige Vertiefung 42 flach abdeckt und sich im Wesentlichen halbkugelig oberhalb dieser erstreckt.

In dem dargestellten Ausführungsbeispiel sind die Einzellinsen 54 optisch an die gemeinsame Sammellinse 44 angeschlossen, wozu eine je bündige Vertiefung dort ausgebildet ist, die der Verbesserung der Lichtankoppelung dienen soll.

Es versteht sich, dass anstelle dessen auch eine beabstandete Anordnung gewählt werden kann.

In dem dargestellten Ausführungsbeispiel ist ferner ein zentraler Sensor 42 ausgebildet, der die von der bestrahlten Fläche reflektierte Lichtabgabe erfasst und die Lichtabgabe durch die LED-Chips 16 regelt.

Es versteht sich, dass der Sensor 52 in an sich bekannter Weise von einem Schwarzrohr umgeben sein kann, um die unmittelbare Beaufschlagung durch das von dem LED-Chip 16 emittierte Licht zu verhindern.

## Patentansprüche

1. Halbleiter-Strahlungsquelle für ein Lichthärtgerät für den Dentalbereich mit einem Basiskörper, wenigstens einem thermisch mit einer Stirnseite des Basiskörpers verbundenen LED-Chip und einem auf der gleichen Stirnseite des Basiskörpers angebrachten, biegbaren Flexprints, wobei der Flexprint den LED-Chip wenigstens teilweise umgibt, wenigstens eine aufgedruckte Leiterbahn (20) aufweist, die elektrisch mit dem LED-Chip verbunden ist, und im Umfangsbereich des Basiskörpers einen abgewinkelten oder abgebogenen Abschnitt (27) aufweist, der sich wenigstens teilweise entlang einer Seitenwand des Basiskörpers erstreckt, wobei sich wenigstens ein Teil des Abschnitts (27) des Flexprint (14) mindestens teilweise in eine seitliche Ausnehmung (34) des Basiskörpers (12) hinein erstreckt, wobei die Ausnehmung (34) von einem seitlichen Einschnitt (31) oder von einer Durchtrittsöffnung (28) gebildet ist und sich der Abschnitt (27) entlang wenigstens eines Teils einer von dem LED-Chip (16) abgewandten Rückseite des Basiskörpers (12), insbesondere dessen Stirnkörper, erstreckt, und der Abschnitt, mindestens im Bereich der Ausnehmung (34), wenigstens ein elektronisches Bauteil wie eine Diode, ein Widerstand oder ein ASIC trägt, und die elektronischen Bauteile in der Ausnehmung (34) versenkt aufgenommen sind.

2. Halbleiter-Strahlungsquelle nach Anspruch 1, **dadurch gekennzeichnet, dass** der Abschnitt (27) eine Breite aufweist, die geringer als eine Seitenlänge des Basiskörpers (12) ist.

3. Halbleiter-Strahlungsquelle nach einem der vorstehenden Ansprüche, **dadurch gekennzeichnet, dass** der Abschnitt ein freies Ende aufweist, das von der Rückseite des Basiskörpers (12) frei abragt und insbesondere frei von elektronischen Bauteilen ist.

4. Halbleiter-Strahlungsquelle nach einem der vorstehenden Ansprüche, **dadurch gekennzeichnet, dass** ein Stirnkörper des Basiskörpers (12) mit einem Wärmeableitkörper (32) thermisch verbunden ist.

5. Halbleiter-Strahlungsquelle nach Anspruch 4, **dadurch gekennzeichnet, dass** der Wärmeableitkörper (32) eine Ausnehmung (34) aufweist, in die der Abschnitt (27), insbesondere das freie Ende des Abschnitts, ragt.

6. Halbleiter-Strahlungsquelle nach einem der vorstehenden Ansprüche, **dadurch gekennzeichnet, dass** eine Mehrzahl von LED-Chips (16) auf dem Basiskörper (12) angebracht sind, wobei mindestens ein LED-Chip separat ansteuerbar ist.

7. Halbleiter-Strahlungsquelle nach einem der vorstehenden Ansprüche, **dadurch gekennzeichnet, dass** wenigstens zwei LED-Chips (16) Licht mit unterschiedlichen Wellenlängen emittieren.

8. Halbleiter-Strahlungsquelle nach einem der vorstehenden Ansprüche, **dadurch gekennzeichnet, dass** jeder LED-Chip oder alle LED-Chips (16) in einer Vertiefung des Basiskörpers angeordnet ist/sind.

9. Halbleiter-Strahlungsquelle nach einem der vorstehenden Ansprüche, **dadurch gekennzeichnet, dass** alle LED-Chips (16) von einer Sammellinse abgedeckt sind.

10. Halbleiter-Strahlungsquelle nach einem der vorstehenden Ansprüche, **dadurch gekennzeichnet, dass** jede Vertiefung, in der sich ein LED-Chip befindet, von einer zusätzlichen Linse abgedeckt ist.

## Claims

1. A semiconductor radiation source for a light-curing apparatus for the dental sector, having a base body, at least one LED chip thermally bonded to an end face of the base body and a flexible flexprint mounted to the same end face of the base body, the flexprint at least partially surrounding the LED chip, comprising at least one printed conductor path (20), which is electrically connected to the LED chip, and comprising an angled or bent portion (27) in the peripheral region of the base body, which extends at least partially along a side wall of the base body, at least a portion of the portion (27) of the flexprint (14) extending at least partially into a lateral recess (34) of the base body (12), wherein the recess (34) is formed by a lateral incision (31) or by a passage opening (28), and the portion (27) extends along at least part of a rear side of the base body (12) facing away from the LED chip (16), and especially extends along the end body thereof, and the portion, at least in the region of the recess (34), carries at least one electronic component such as a diode, a resistor or an ASIC, and the electronic components are embeddedly received in the recess (34).

2. The semiconductor radiation source according to claim 1, **characterized in that** the portion (27) has a width which is less than a side length of the base body (12).

3. The semiconductor radiation source according to one of the preceding Claims, **characterized in that** the portion comprises a free end which freely projects from the rear side of the base body (12) and especially is free of electronic components.

4. The semiconductor radiation source according to one of the preceding Claims, **characterized in that** an end body of the base body (12) is thermally connected to a heat dissipating body (32).

5. The semiconductor radiation source according to claim 4, **characterized in that** the heat dissipating body (32) comprises a recess (34) into which the portion (27), especially the free end of the portion, projects.

6. The semiconductor radiation source according to one of the preceding Claims, **characterized in that** a plurality of LED chips (16) are mounted on the base body (12), at least one LED chip being separately controllable.

7. The semiconductor radiation source according to one of the preceding Claims, **characterized in that** at least two LED chips (16) emit light having different wavelengths.

8. The Semiconductor radiation source according to one of the preceding Claims, **characterized in that** each LED chip or all LED chips (16) is/are arranged in a recess of the base body.

9. The semiconductor radiation source according to one of the preceding Claims, **characterized in that** all LED chips (16) are covered by a converging lens.

10. The semiconductor radiation source according to one of the preceding Claims, **characterized in that** each recess, in which an LED chip is located, is covered by an additional lens.

## Revendications

1. Source de rayonnement à semi-conducteurs pour un appareil de photopolymérisation pour le domaine dentaire avec un corps de base, au moins une puce LED thermiquement reliée à une face du corps de base et un circuit imprimé flexible pliable attaché sur la même face du corps de base, où le circuit imprimé flexible entoure au moins partiellement la puce LED, présente au moins une piste imprimée (20), qui est connectée électriquement avec la puce LED et présente dans la zone périphérique du corps de base une section inclinée ou recourbée (27), qui s'étend au moins partiellement le long d'une paroi latérale du corps de base, où au moins une partie de la section (27) du circuit imprimé flexible (14) s'étend au moins partiellement dans un renfoncement latéral (34) du corps de base (12), où le renfoncement latéral (34), est formé par une incision latérale (31) ou d'une ouverture de passage (28) et la section (27) s'étend le long d'au moins une partie d'une face arrière du corps de base (12) s'éloignant de la puce LED (16), en particulier son corps avant, et la section porte, au moins dans le domaine de l'évidement (34), au moins un composant électronique comme une diode, une résistance ou un ASIC, et les composants électroniques sont enfoncés dans le renfoncement (34).

2. Source de rayonnement à semi-conducteurs selon la revendication 1, **caractérisé en ce que** la section (27) présente une largeur, qui est inférieur à une longueur du corps de base (12).

3. Source de rayonnement à semi-conducteurs selon l'une des revendications précédentes, **caractérisé en ce que** la section présente une extrémité libre, qui fait saillie libre à l'arrière du corps de base (12) et en particulier est libre de composants électroniques.

4. Source de rayonnement à semi-conducteurs selon l'une des revendications précédentes, **caractérisé en ce que** un corps avant du corps de base (12) est relié à un corps de dissipation de la chaleur (32).

5. Source de rayonnement à semi-conducteurs selon la revendication 4, **caractérisé en ce que** le corps de dissipation de la chaleur (32) présente un renfoncement (34), dans lequel la section (27), en particulier l'extrémité libre de la section, pénètre.

6. Source de rayonnement à semi-conducteurs selon l'une des revendications précédentes, **caractérisées en ce qu'**une pluralité de puces LED (16) sont installés sur le corps de base (12), où au moins une puce LED est réglable séparément.

7. Source de rayonnement à semi-conducteurs selon l'une des revendications précédentes, **caractérisé en ce qu'**au moins deux puces LED (16) émettent de la lumière à différentes longueurs d'onde.

8. Source de rayonnement à semi-conducteurs selon l'une des revendications précédentes, **caractérisé en ce que** chaque puce LED ou toutes les puces LED (16) sont disposés dans une cavité du corps de base.

9. Source de rayonnement à semi-conducteurs selon l'une des revendications précédentes, **caractérisé en ce que** toutes les puces LED (16) sont recouvertes d'une lentille de convergence.

10. Source de rayonnement à semi-conducteurs selon l'une des revendications précédentes, **caractérisé en ce que** chaque cavité, dans laquelle se trouve une puce LED, est recouverte d'une lentille supplémentaire.
